# EUROPEAN PATENT APPLICATION

(11) **EP 1 854 600 A1**
(43) Date of publication of application: **14.11.2007**
(21) Application number: 07107783.8
(22) Date of filing: 09.05.2007
(51) Int. Cl.: B27B 5/065, B23D 47/02

(54) **Panel saw machine with mobile table.**

(30) Priority: 12.05.2006 IT BO20060359
(71) Applicant: GIBEN INTERNATIONAL S.p.A., 40065 Pianoro (Bologna) (IT)
(72) Inventor: BENUZZI, Piergiorgio, 40141, BOLOGNA (IT)
(74) Representative: Lanzoni, Luciano

(57) **Abstract**

A panel saw machine for panels (2) comprises: means (3) for advancing panels (2) along a feed line (4); a first straight aligning reference (5) against which the sides of the advancing panels (2) are kept in contact; a cutting front (6) transversal to the first reference (5); at least one table (7), located in front of the cutting front (6), for supporting the panels (2) and the respective panel lengths (8) obtained by cutting; and, lastly, a second fixed reference (9), associated with the table (7); the table (7) can be moved sideways in a direction parallel to the cutting front (6) and relative to the second fixed reference (9), in such a way as to divide it into two half-tables (10, 11): the first half-table (10) is located in front of the cutting front (6) and supports the panels (2) and the respective cut panel lengths (8), while the second half-table (11) is located on one side of the cutting front (6) in an idle position.

## Description

This invention relates to the sector of panel saw machines and, in particular to a panel saw machine with mobile table or tables for supporting the products at the end of the line.

Known in prior art are panel saw machines which essentially comprise:
- a main frame comprising a first horizontal table;
- means for advancing the panels in a defined feed direction and usually consisting of a crossbar equipped with clamps for gripping the panel or panels to be sawn and mobile in parallel along the first horizontal table;
- a first fixed straight aligning reference, being one of the uprights of the frame, against which the sides of the panels are kept in contact;
- a straight cutting unit or front, transversal to the first reference and equipped with mobile blades designed to saw the panels;
- a second table, positioned in front of the cutting front, downstream of the cutting unit relative to the direction of panel feed on the first horizontal table, for supporting the panels and/or the respective panel lengths obtained by cutting; and
- a second fixed reference, aligned with, and consecutive to, the first straight reference.

The second table for receiving the cut products (of particular relevance to this invention) is usually dimensioned according to the maximum width of the cutting front of the machine and is equipped with air cushions to make it easier to move and handle the panels.

When the front is very wide, it is common practice to divide the receiving table into two or more smaller sections placed side by side at a suitable distance from each other so that, together, they serve the entire cutting front.

Obviously, one of the purposes of this is to enable the machine operator to move closer to the cutting front when necessary and, in certain machine solutions, to walk between one table section and another in order to access the area near the machine where work needs to be done.

Normally, in constructional solutions of this kind, the table sections are not all the same size.

In fact, in practically all cases, the table section closest to the aligning references (which for convenience, shall be referred to as the first table section) has a frontal extension that is much larger than that of the other table sections. In fact the frontal extension of the first table section may be commensurate with the corresponding maximum extension of the largest panels that may be processed by the panel saw machine.

Thus, when the panel saw is used for panels whose frontal extension is much smaller than that of the first table section, the operator has to work at some distance from the cut products.

This is undoubtedly a disadvantage of prior art machines.

The operator is obliged to work under awkward and, hence, fatiguing conditions, thus increasing the potential accident risk inherent in the use of machines of this kind.

The main aim of this invention is to provide a machine that offers optimum working conditions whatever the frontal extension of the panels being processed.

A further aim of the invention is to provide a versatile machine capable of sawing panels of many different sizes without problems.

In accordance with the above mentioned aims, the invention provides a panel saw machine as defined in the appended claims and, more particularly, as defined in claim 1 and/or in any of the claims directly or indirectly dependent thereon.

The technical characteristics of the machine according to the invention are described in full detail below with reference to the accompanying drawings in which:
- Figure 1 is a top plan view schematically illustrating a panel saw machine according to the invention in a first operating configuration;
- Figure 2 shows the machine of Figure 1 in a second operating configuration different from the first;
- Figure 3 is a schematic front view, with some parts cut away in order to better illustrate others, of the panel saw machine illustrated in the drawings listed above.

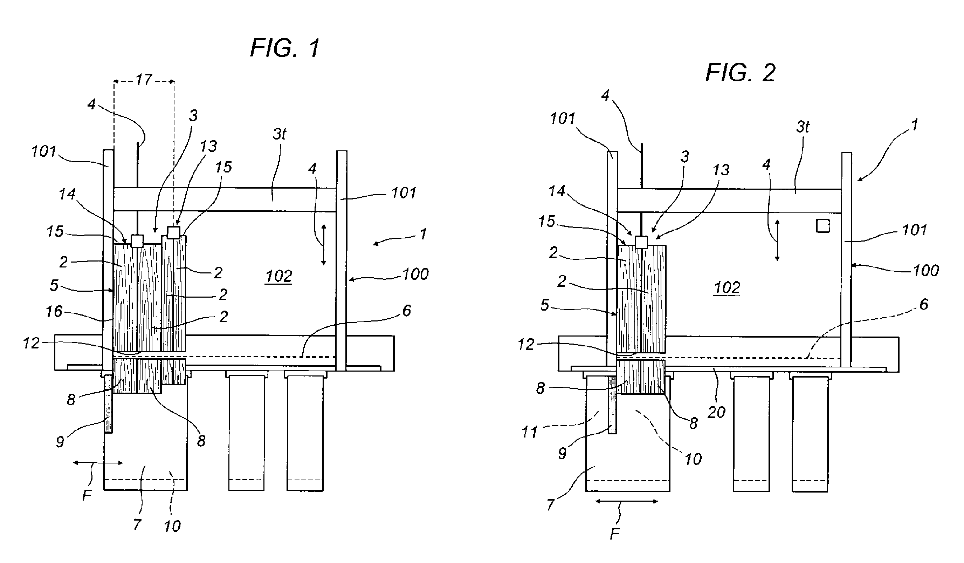

With reference to the accompanying drawings, Figures 1 and 2 illustrate, in its entirety, a panel saw machine 1 by which flat panels 2, made of wood or like materials - used for example in the furniture industry - are cut into smaller panel lengths suitable for specific further processes.

The panel saw machine 1 basically comprises:
- a frame 100 having two uprights 101 delimiting a handling table or surface 102;
- means 3 for advancing the panels 2 in a feed direction 4 on the surface 102;
- a first reference 5 (defined by one of the uprights 101) and a second reference 9, both references being straight and fixed, for aligning the panels 2;
- a straight cutting unit or front 6, transversal to the references 5 and 9; and
- one or two tables 7 for supporting the products downstream of the cutting front 6 relative to the feed direction 4.

More specifically, the feed means 3 comprise a crossbar 3t which moves to and fro in the feed direction 4, and one or more clamps 13 and 14 (in this non-restricting embodiment described by way of example, there are two clamps) by which the panels 2 to be sawn are: gripped by their rear edge 15 and made to advance towards the cutting front 6 along a horizontal handling table.

Obviously, without restricting the scope of the solution according to the invention, the clamps 13 and 14 may be fixed to the crossbar 3t or they may be slidable longitudinally along the crossbar 3t.

The generic cutting front 6 may consist of one or more circular blades (not illustrated) designed to saw the panels 2.

As they advance, the panels 2 are aligned by keeping one side of them 16 in contact with the first straight, fixed reference 5.

Under these conditions, the panels 2, gripped by the clamps 13 and 14 and pushed forward by the moving crossbar 3t, advance in a straight line along the feed direction or line 4, crossing the cutting front 6 until they rest on the table 7, in front of the cutting front 6, while being kept in lateral contact with the second fixed reference 9, which is aligned with, and consecutive to, the first linear reference 5.

During the stops between two consecutive feed steps, conventional cutting tools (the above mentioned circular blades), operating in a vertical plane passing through the cutting front 6 and not illustrated since they are not relevant to this invention, saw the panels 2 into lengths 8 which remain on the table 7.

Comparing Figures 1 and 2 shows that the table 7 is slidable in a direction parallel to the cutting front 6 and relative to the second fixed reference 9.

Thanks to this possibility of movement, the table 7 slides underneath the second fixed reference 9 and is thus divided into two adjacent half-tables 10, 11.

The first half-table 10 is in front of the cutting front 6 and supports the panels 2 and the respective cut panel lengths 8.

The second half table 11, on the other hand, is located on one side of the cutting front 6 and does not support any panels or panel parts.

It is obvious that the relative size of the two half-tables 10 and 11 varies according to how far sideways the table 7 is moved: the larger one half table is, the smaller the other, depending on requirements.

In short, the possibility of moving the table 7 sideways makes it possible to adapt the frontal extension of the table 7 according to the actual frontal extension of the panels 2, as may be clearly inferred from Figures 1 and 2.

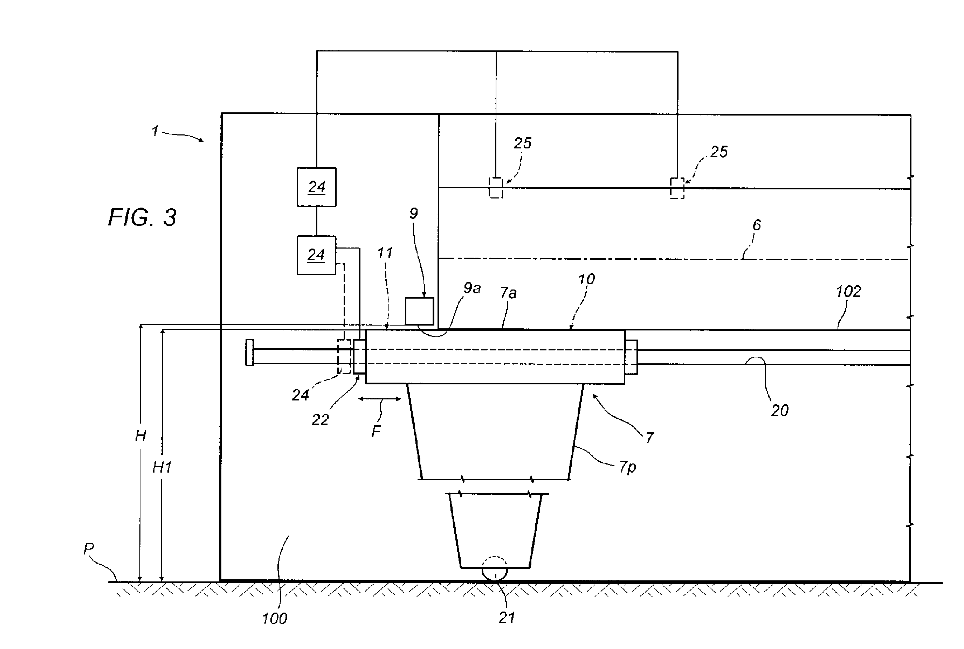

As illustrated in Figure 3, each table 7 may consist of a horizontal surface 7a which the panels 2 rest on and a vertical supporting foot 7p associated with the end of the table 7 furthest away from the cutting front 6.

Figure 3 also shows how the underside 9a of the second fixed reference 9 is positioned at a height H, relative to a floor P, that is greater than the height H1 of the top surface 7a of the table 7.

With the end of it closest to the cutting front 6, the table 7 is also slidably associated with a horizontal slideway 20 associated with the known machine table and designed to enable the table 7 to move sideways in a direction (indicated by the arrows F) parallel to the cutting front 6.

As shown in Figures 1 to 3, the slideway 20 extends beyond the second reference 9 (to allow the sideways movement enabling the two half tables to be divided from each other) and may extend for a length greater than the total length of the cutting front 6.

In order to optimize movement of the table, the bottom end of each foot 7p that supports each table 7 is equipped with an element 21 (usually a wheel keyed to the foot 7p) by which it runs on a floor P.

Obviously, the table 7 may be moved to the required working positions manually by a machine operator or, in an alternative embodiment, it may be moved automatically.

The numeral 22 in Figure 3 denotes automatic movement means for adjusting the position of the table 7.

The means 22 may be customary drive mechanisms (a lead nut and screw mechanism or the like) operating between the table 7 and the slideway 20 to optimize the position of the table 7 relative to the cutting front 6 and to the second fixed reference 9 according to the size of the panel 2 being cut.

Preferably, the movement means 22 are controlled by a unit 23 that controls the main and auxiliary functions of the machine 1 (for example, customary microprocessor units for programming the machine cycles).

When cutting panels 2 whose frontal extension is constant, the movement of the table 7 may be obtained by making a simple adjustment before sawing starts.

On the other hand, to obtain a variable adjustment in accordance with the actual frontal extension 12 of the panels 2 advancing along and in contact with the first straight reference 5, the width of the half tables 10 and 11 may be set using suitable measuring means 24 (for example a mobile fence on the slideway 20) which may be controlled, even automatically, according to the frontal extension 12 of the advancing panels 2, detected by suitable sensors 25.

The sensors may be embodied in a wide variety of ways. In a first embodiment, the frontal extension of the panels 2 is detected by photocells mounted on the machine 1 (as illustrated schematically in Figure 3).

In an alternative embodiment, especially useful when the machine 1 is equipped with a clamp 13 that moves towards and away from the first fixed reference 5 in a direction parallel to itself, the instantaneous distance 17 of the mobile clamp 13 from the first fixed reference 5 is read directly or indirectly and the actual movement of the table 7 is then correlated to this distance 17.

Obviously, the measuring means 24 and the related sensors 25 may be controlled by the control unit 23 and connected to the means 22 that move the table 7.

A machine structured in this way, therefore, achieves the above mentioned aims thanks to the extremely simple and rational structuring of the panel receiving area which can be adjusted according to working requirements at any time.

The possibility of adjusting the table relative to the second fixed reference according to the size of the panels enables the operator to work under optimum ergonomic conditions, thus reducing the potential accident risk and, at the same time, improving and speeding up the process cycles.

The invention described is susceptible of industrial application and may be modified and adapted in several ways without thereby departing from the scope of the inventive concept. Moreover, all the details of the invention may be substituted by technically equivalent elements.

## Claims

1. A panel saw machine for panels (2), comprising:
- means (3) for advancing the panels (2) along a feed line (4);
- a first fixed straight aligning reference (5) against which the sides of the advancing panels (2) are kept in contact;
- a straight front (6) for cutting the panels (2) and transversal to the first reference (5);
- at least one table (7), located in front of the cutting front (6), that is to say, downstream of the front (6) relative to the feed line (4), for supporting the panels (2) and/or the respective cut panel lengths (8); and
- a second fixed reference (9), aligned with, and consecutive to, the first straight reference (5); the machine being **characterised in that** the table or tables (7) can be moved sideways in a direction parallel to the cutting front (6) and relative to the second fixed reference (9), in such a way that, when required, it can divided by the second fixed reference (9) into two half-tables (10, 11), where the first half-table (10) is located in front of the cutting front (6) and supports the panels (2) and the respective cut panel lengths (8), and the second half-table (11) is located on one side of the cutting front (6) in an idle position.

2. The machine according to claim 1, where the table or tables (7) is composed of a horizontal surface (7a) which the panels (2) rest on and a vertical supporting foot (7p) associated with the end of the table or of each table (7) furthest away from the cutting front (6), the machine being **characterised in that** with the end of it closest to the cutting front (6), the table or each table (7) is slidably associated with a horizontal slideway (20) designed to enable the table or each table (7) to move sideways in a direction (F) parallel to the cutting front (6).

3. The machine according to claim 1, **characterised in that** the slideway (20) extends at least to a point past the second fixed reference (9) in such a way as to enable the table (7) to move sideways beyond the second reference (9) in order to define the two half tables (10, 11).

4. The machine according to claim 2, **characterised in that** the bottom end of each foot (7p) that supports the table or each table (7) is equipped with an element (21) by which it runs on a floor (P).

5. The machine according to claims 1 to 4, **characterised in that** it comprises movement means (22) for automatically adjusting the position of the table or of each table (7) operating between the table (7) itself and the slideway (20).

6. The machine according to claim 5, **characterised in that** the movement means (22) are controlled by a unit (23) that controls the main and auxiliary functions of the machine (1).

7. The machine according to claim 1, **characterised in that** the underside (9a) of the second fixed reference (9) is positioned at a height (H), relative to a floor (P), that is greater than the height (H1) of the top supporting surface (7a) of the table or of each table (7).

8. The machine according to claim 1, **characterised in that** it comprises means (24) for measuring the width of the half tables (10, 11) according to the frontal extension (12) of the panels (2) advancing along and in contact with the first straight reference (5).

9. The machine according to claim 8, **characterised in** the means (24) for measuring the width of the half tables (10, 11) are controlled automatically by a control unit (23) according to the frontal extension (12) of the advancing panels (2), detected by suitable sensors (25).

10. The machine according to claim 9, where the panels (2) are gripped and made to advance towards the cutting front (6) by the feed means (3) which comprise at least one clamp (13) mobile in a direction parallel to itself and to the cutting front (6) towards and away from the first fixed reference (5), **characterised in that** the means (24) for measuring the width of the half tables (10, 11) are controlled according to the instantaneous distance (17) of the mobile clamp (13) from the first reference (5).

11. The machine according to any of the foregoing claims, **characterised in that** the measuring means (24) are connected to the means (22) for moving the table or each table (7) and are controlled by the control unit (23).
